# FASCICULE DE BREVET EUROPEEN

(11) **EP 4 557 106 B1**
(45) Date de publication et mention de la délivrance du brevet: **21.01.2026**
(21) Numéro de dépôt: 24211549.1
(22) Date de dépôt: 07.11.2024
(51) Int. Cl.: G06F 12/02, G06F 12/14, G06F 21/79

(54) **PROCEDE DE FONCTIONNEMENT D'UNE MEMOIRE NON VOLATILE**
VERFAHREN ZUM BETRIEB EINES NICHTFLÜCHTIGEN SPEICHERS
METHOD FOR OPERATING A NON-VOLATILE MEMORY

(30) Priorité: 17.11.2023 FR 2312668
(43) Date de publication de la demande: 21.05.2025
(73) Titulaire: STMicroelectronics International N.V., 1228 Plan-les-Ouates, Geneva (CH)
(72) Inventeur: BENHAMMADI, Jawad, 38800 PONT DE CLAIX (FR)
(74) Mandataire: Cabinet Beaumont

(56) Documents cités:
- US-A1- 2008 276 051
- US-A1- 2016 299 720
- US-B1- 6 952 778

## Description

### Domaine technique

La présente description concerne de façon générale les procédés de fonctionnement d'une mémoire non volatile ainsi que les circuits électroniques mettant en oeuvre ces procédés.

### Technique antérieure

De nombreux circuits électroniques comme les microcontrôleurs utilisent des applications, par exemple des programmes de démarrage (BOOT en anglais), qui sont chargés dans une mémoire non volatile du circuit. Ces applications peuvent vouloir configurer certains secteurs de la mémoire non volatile. Cependant, des applications malveillantes peuvent vouloir modifier la configuration de secteurs de la mémoire liés à d'autres applications. La publication US 2016/299720 A1 divulgue une logique de protection de la mémoire qui accorde ou refuse sélectivement les demandes d'accès mémoire selon un ensemble d'attributs configurables pour une région mémoire donnée.

### Résumé de l'invention

Il existe un besoin de fournir des procédés de fonctionnement de mémoire non volatile qui empêchent les modifications de configuration de secteurs de mémoire par des applications malveillantes tout en permettant la configuration de secteurs de mémoire tout au long du cycle de vie des circuits.

Un mode de réalisation pallie tout ou partie des inconvénients des procédés connus.

Un mode de réalisation prévoit un procédé de fonctionnement d'une mémoire non volatile, comprenant la validation d'une transaction, demandant une modification d'une valeur de configuration d'un secteur de la mémoire, après comparaison des attributs de la transaction avec des attributs d'accès dudit secteur de ladite mémoire.

Selon un mode de réalisation, la transaction est validée lorsque tous les attributs de la transaction ont un niveau de sécurité supérieur ou identique aux attributs d'accès dudit secteur de ladite mémoire correspondants.

Selon un mode de réalisation, un registre avec tableau d'association est configuré pour stocker ladite valeur de configuration pour chaque secteur de la mémoire.

Selon un mode de réalisation, la valeur d'un bit d'indice donné dudit tableau correspond à la valeur de configuration d'un secteur ayant le même indice.

Selon un mode de réalisation, une interface mémoire est configurée pour autoriser ou refuser une transaction en fonction des attributs de la transaction et des attributs d'accès de secteurs de la mémoire.

Selon un mode de réalisation, l'interface mémoire est configurée pour mettre en oeuvre ledit registre avec tableau d'association.

Selon un mode de réalisation, la validation de la transaction est réalisée par l'interface mémoire.

Selon un mode de réalisation, les attributs de la transaction sont les attributs d'une application mettant en oeuvre ladite transaction.

Selon l'invention, les attributs de la transaction comprennent un niveau de restriction d'accès, un niveau de restriction de mode d'adressage, et un niveau d'interdiction d'accès de programme pris parmi un premier, un deuxième et un troisième niveaux d'interdiction d'accès de programme ; et les attributs du secteur comprennent le niveau de restriction d'accès, le niveau de restriction de mode d'adressage, et un niveau d'interdiction d'accès de programme pris parmi un quatrième, un cinquième et un sixième niveaux d'interdiction d'accès de programme.

Selon un mode de réalisation, une transaction ayant un attribut correspondant à un premier niveau de restriction d'accès peut accéder à un secteur ayant le premier ou un deuxième niveau de restriction d'accès ; une transaction ayant un attribut correspondant à un premier niveau de restriction de mode d'adressage peut accéder à un secteur ayant un deuxième niveau de restriction de mode d'adressage ; une transaction ayant un attribut correspondant au deuxième niveau de restriction d'accès ne peut pas accéder à un secteur ayant le premier niveau de restriction d'accès ; et une transaction ayant un attribut correspondant à un deuxième niveau de restriction de mode d'adressage ne peut pas accéder à un secteur ayant le premier niveau de restriction de mode d'adressage.

Selon un mode de réalisation, une transaction ayant un attribut correspondant à un premier niveau d'interdiction d'accès de programme peut accéder à un secteur ayant comme attribut un quatrième, un cinquième ou un sixième niveaux d'interdiction d'accès de programme ; une transaction ayant un attribut correspondant à un deuxième niveau d'interdiction d'accès de programme peut accéder à un secteur ayant comme attribut le cinquième et le sixième niveaux de protection mais ne peut pas accéder à un secteur ayant comme attribut le quatrième niveau d'interdiction d'accès de programme ; et une transaction ayant un attribut correspondant à un troisième niveau d'interdiction d'accès de programme, peut accéder à un secteur ayant comme attribut le sixième niveau d'interdiction d'accès de programme mais ne peut pas accéder à un secteur ayant comme attribut le quatrième ou le cinquième niveaux d'interdiction d'accès de programme.

Selon un mode de réalisation, les attributs du secteur de la mémoire sont soit les attributs d'une transaction précédente soit des attributs par défaut définis par le premier niveau de restriction d'accès, le deuxième niveau de restriction de mode d'adressage, et le quatrième niveau d'interdiction d'accès de programme.

Selon un mode de réalisation, la valeur de configuration correspond à un mode de cyclage, un mode de protection en écriture ou un mode d'écriture.

Un mode de réalisation prévoit un circuit électronique, comprenant une interface de mémoire non volatile et une mémoire non volatile, configuré pour mettre en oeuvre le procédé décrit ci-dessus.

Un mode de réalisation prévoit un procédé de fonctionnement d'une mémoire non volatile, dans lequel :
- une première et une deuxième transactions successives demandent une modification d'une valeur de configuration d'une même zone mémoire de ladite mémoire non volatile, les attributs de la première transaction ayant un niveau de sécurité supérieur à ceux de la deuxième transaction ; et
- la deuxième transaction est refusée.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de circuit intégré du type auquel s'appliquent les modes de réalisation décrits ;
la figure 2 représente un exemple de procédé de fonctionnement du circuit de la figure 1 ;
la figure 3 représente un procédé de fonctionnement du circuit de la figure 1 selon un mode de réalisation ;
la figure 4 représente un procédé de fonctionnement du circuit de la figure 3 selon un mode de réalisation ; et
la figure 5 représente un procédé de fonctionnement du circuit de la figure 3 selon un mode de réalisation.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

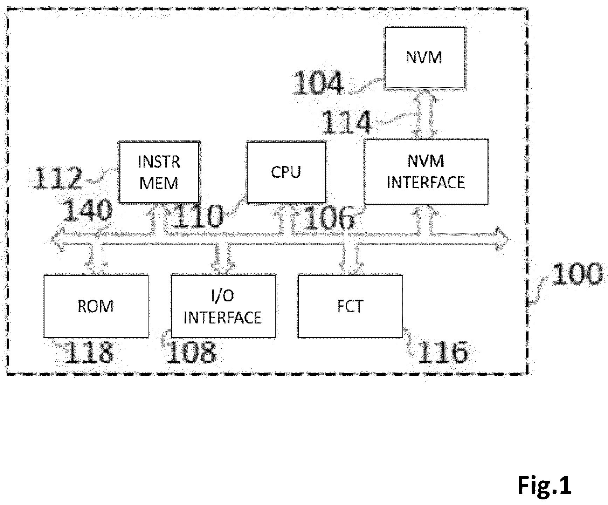

La figure 1 représente, de façon très schématique et sous forme de blocs, un exemple de circuit intégré 100 du type auquel s'appliquent les modes de réalisation décrits. Le circuit 100 est par exemple un microcontrôleur.

Le circuit 100 comprend une mémoire non-volatile 104 (NVM), par exemple de type mémoire FLASH ou à changement de phase (Phase change memory, PCM, en anglais), capable de communiquer, via un bus de communication 114, avec une interface de mémoire non-volatile 106 (NVM INTERFACE) configurée pour écrire ou lire des données dans et depuis la mémoire non-volatile 104.

Le circuit 100 comprend en outre, par exemple, une unité de traitement 110 (CPU) comprenant un ou plusieurs processeurs sous contrôle d'instructions stockées dans une mémoire d'instructions 112 (INSTR MEM). La mémoire d'instruction 112 est par exemple une mémoire volatile de type à accès aléatoire (en anglais Random Access Memory, RAM). L'unité de traitement 110 et la mémoire 112 communiquent, par exemple, via un bus système 140 (de données, d'adresses et de commande). La mémoire non volatile 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le circuit 100 peut intégrer d'autres circuits mettant en oeuvre d'autres fonctions (par exemple, une ou plusieurs mémoires volatiles et/ou non-volatiles, ou d'autres unités de traitement), symbolisées par un bloc 116 (FCT) en figure 1. Parmi ces autres circuits, le circuit 100 comporte par exemple une mémoire morte ou statique 118 (ROM).

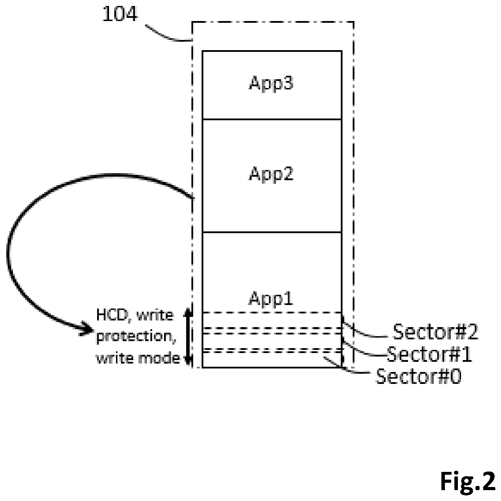

La figure 2 représente un exemple de procédé de fonctionnement du circuit de la figure 1.

Plus particulièrement, la figure 2 représente un exemple de procédé de fonctionnement de la mémoire 104.

Dans l'exemple représenté, des données relatives à une première, une deuxième et une troisième applications (App1, App2 et App3), sont stockées dans différents secteurs de la mémoire 104. Les applications App1, App2 et App3 sont définies avec des attributs dont un niveau de permission d'accès ou de restriction d'accès, un niveau de privilège, et un niveau d'interdiction d'accès de programme.

Le niveau de restriction d'accès d'une application définit par exemple une accessibilité de zones mémoires. Le niveau de privilèges d'une application définit par exemple des restrictions de mode d'adressage. Le niveau d'interdiction d'accès de programme définit par exemple des interdictions d'accès d'autres applications, ou de données utilisées par les autres applications.

L'accès aux différents secteurs se fait par la mise en oeuvre, par les applications, de transactions.

Dans un exemple, une application définie pour avoir un premier niveau de restriction d'accès (secure, Sec), a plus de droit qu'une application avec un deuxième niveau de restriction d'accès (non-secure, NS). Les premier et deuxième niveaux de restriction d'accès sont par exemple mis en oeuvre avec le protocole TrustZone de l'architecture ARM^{®} CORTEX-M. Dans un exemple, une application définie pour avoir un premier niveau de privilèges (priviledged, Priv) a plus de droit qu'une application avec un deuxième niveau de privilèges (unpriviledged, unPriv). Les premiers et deuxième niveaux de privilèges sont par exemple ceux mis en oeuvre avec une architecture ARM. Une application mise en oeuvre dans le premier mode de privilèges (Priv), autrement dit dans le premier mode de restriction de mode d'adressage, a par exemple son propre espace avec des adresses physiques. Une application mise en oeuvre dans le deuxième mode de privilèges (unPriv), autrement dit dans le deuxième mode de restriction de mode d'adressage, a par exemple son propre espace avec des adresses virtuelles et ne peut pas avoir accès à d'autres processus liés à la mémoire qui utiliseraient directement des adresses physiques. Dans un exemple, une application définie avec un premier niveau d'interdiction d'accès de programme HDPL1 a plus de droits qu'une application avec un deuxième niveau d'interdiction d'accès de programme HDPL2. De même, une application définie avec le deuxième niveau d'interdiction d'accès de programme HDPL2 a plus de droits qu'une application avec un troisième niveau d'interdiction d'accès de programme HDPL3. Les niveaux d'interdiction d'accès de programme HDPL1, HDPL2 et HDPL3 correspondent par exemple à des niveaux de protection de programmes de démarrage installés successivement, le but étant qu'un programme de démarrage installé après ne puisse pas accéder au programme de démarrage installé précédemment. Les niveaux de protection sont par exemple implémentés en utilisant un compteur monotonique.

Dans le texte, une transaction mise en oeuvre par une application a les mêmes attributs que l'application mettant en oeuvre cette transaction.

Les secteurs de la mémoire 104 sont définis avec différents attributs d'accès. Ces attributs d'accès sont par exemple le niveau de permission ou de restriction d'accès, le niveau de privilège, et un niveau d'interdiction d'accès de programme.

Un secteur peut par exemple être défini avec le premier ou le deuxième niveau de restriction d'accès Sec, NS. Ainsi, une application définie avec le deuxième niveau de restriction d'accès NS ne peut pas avoir accès à un secteur défini avec le premier niveau de restriction d'accès Sec. Une application définie avec le premier niveau de restriction d'accès Sec peut avoir accès à un secteur défini avec le premier ou le deuxième niveau de restriction d'accès Sec, NS.

Un secteur peut en outre être défini avec le premier ou le deuxième niveau de privilèges Priv, unPriv. Ainsi, une application définie avec le deuxième niveau de privilèges unPriv ne peut pas avoir accès à un secteur défini avec le premier niveau de privilèges Priv. Une application définie avec le premier niveau de privilège Priv peut avoir accès à un secteur défini avec le premier ou avec le deuxième niveau de privilèges Priv, unPriv.

Un secteur peut en outre être défini avec un quatrième, un cinquième ou un sixième niveaux d'interdiction d'accès de programme OB-HDP, HDP-EXT, non-HDP. Ainsi, une application définie avec le premier niveau d'interdiction d'accès de programme HDPL1, qui est par exemple un premier étage de programme de démarrage, peut avoir accès à un secteur défini avec les quatrièmes, cinquième ou sixième niveaux d'interdiction d'accès de programme OB-HDP, HDP-EXT, non-HDP. Une application définie avec le deuxième niveau d'interdiction d'accès de programme HDPL2, qui est par exemple un deuxième étage de programme de démarrage, peut avoir accès à un secteur défini avec les cinquièmes ou sixièmes niveaux de protection HDP-EXT, non-HDP mais pas à un secteur défini avec le quatrième niveau d'interdiction d'accès de programme OB-HDP. Une application définie avec le troisième niveau d'interdiction d'accès de programme HDPL3, qui est par exemple un troisième étage de programme de démarrage, peut avoir accès à un secteur défini avec le sixième niveau d'interdiction d'accès de programme non-HDP mais pas à un secteur défini avec le quatrième ou le cinquième niveau d'interdiction d'accès de programme OB-HDP, HDP-EXT.

En plus des attributs, chaque secteur de la mémoire 104 est configuré avec une ou des valeurs de configuration, stockées dans des registres, et qui correspondent par exemple à un mode de cyclage élevé (HCD), un mode de protection en écriture (Write protection) ou un mode d'écriture (write mode).

Dans le mode de protection en écriture (Write protection), les secteurs ayant cette configuration n'acceptent aucune demande d'accès en écriture. Ils peuvent être néanmoins lus.

Dans l'exemple représenté, les secteurs mémoire de la mémoire 104, référencés Sector#0, Sector#1, Sector#2, sont utilisés par la première application App1.

Un inconvénient de l'exemple représenté réside dans le fait que la valeur de configuration des secteurs, écrite par une application ayant un niveau de protection donné, peut être modifiée par une application ayant moins de permissions. Ainsi, dans un exemple, l'application App1, de niveau d'interdiction d'accès de programme HDPL1, peut écrire la valeur de configuration des secteurs Sector#0, Sector#1, Sector#2 comme étant HCD. L'application App2, de niveau d'interdiction d'accès de programme HDPL2, peut par exemple désactiver le mode HCD de ces secteurs ce qui peut entraîner un déni de service.

Dans un autre exemple, l'application App1, dont les attributs sont définis avec le premier niveau de restriction d'accès Sec, le premier niveau de privilèges Priv, et le niveau d'interdiction d'accès de programme HDPL1, a écrit la valeur de configuration des secteurs Sector#0, Sector#1, Sector#2 comme étant write protection. L'application App2, dont les attributs sont définis avec le premier niveau de restriction d'accès Sec, le deuxième niveau de privilèges unPriv, et le niveau d'interdiction d'accès de programme HDPL2, peut par exemple diminuer le nombre de secteurs configurés en mode write protection. Cela entraîne une modification de l'application App1.

Un autre inconvénient de l'exemple représenté est que la ou les valeurs de configuration ne sont pas disponibles pendant la totalité du cycle de vie du produit ce qui est limitant.

Pour pallier à ces inconvénients, les modes de réalisation décrits proposent un procédé de fonctionnement de la mémoire 104, comprenant la validation d'une transaction demandant une modification d'une valeur de configuration d'un secteur de la mémoire 104 après comparaison des attributs de la transaction avec des attributs d'accès dudit secteur de ladite mémoire.

Cela permet de rendre les secteurs mémoire disponibles pour toutes les applications sans compromis sur la sécurité. De plus, les différentes configurations des secteurs restent disponibles pour toutes les applications à chaque étape du cycle de vie du produit par exemple lors de la personnalisation chez différents sous-traitants.

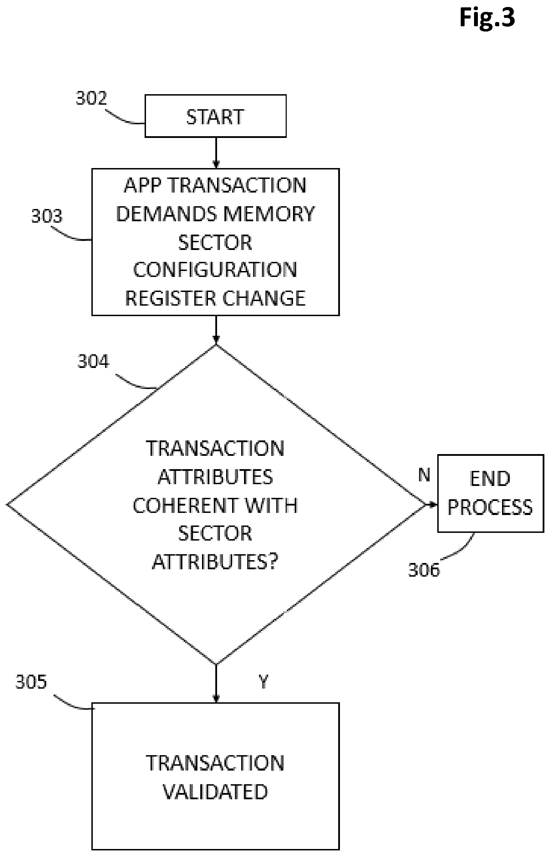

La figure 3 représente un procédé de fonctionnement du circuit de la figure 1 selon un mode de réalisation.

Dans une étape 302 (START) le procédé démarre.

Dans une étape suivante 303 (APP TRANSACTION DEMANDS MEMORY SECTOR CONFIGURATION REGISTER CHANGE), une transaction générée par une application demande un changement de valeur de configuration, relative à un secteur référencé par exemple avec un indice « i **».** Autrement dit la transaction demande une écriture dans le registre de configuration.

Dans une étape suivante 304 (TRANSACTION ATTRIBUTES COHERENT WITH SECTOR ATTRIBUTES?), l'interface de mémoire 106 vérifie la cohérence entre les attributs de la transaction, autrement dit de l'application mettant en oeuvre la transaction, et les attributs d'accès du secteur d'indice « i **».** Si l'application émettrice de la transaction a la permission d'accéder au secteur référencé « i » alors la transaction est acceptée (branche Y) lors d'une étape ultérieure 305 (TRANSACTION VALIDATED). Si l'application émettrice de la transaction n'a pas la permission d'accéder au secteur référencé « i » alors la transaction est rejetée (branche N) lors d'une étape ultérieure 306 (END PROCESS) et une erreur est renvoyée via le bus 114 ou il n'y a pas de réaction (opération appelée write ignore) par exemple.

Les étapes 302 à 306 sont par exemple réalisées à n'importe quel moment du cycle de vie du produit.

Dans un exemple, un registre avec tableau d'association (Bitmap register) est utilisé pour stocker les valeurs de configuration pour chaque secteur. Dans ce cas, la valeur du bit « i » du registre de valeurs de configuration correspond à la valeur de configuration du secteur référencé avec l'indice « i ». La mise en oeuvre du tableau d'association permet une facilité de mise en oeuvre.

Les tableaux suivants TABLE 1, TABLE 2 et TABLE 3 résument les cas où un attribut de transaction est d'un niveau de sécurité supérieur à un attribut d'accès d'un secteur « i ». En d'autres termes, un attribut d'une transaction demandant l'accès en écriture au registre de configuration de secteur est d'un niveau de sécurité supérieur ou identique à un attribut d'accès d'un secteur « i » si l'autorisation de l'accès au bit « i » du registre de configuration du secteur « i » est acceptée. Pour le dire autrement, les attributs de la transaction ont un niveau de sécurité supérieur ou identique aux attributs d'accès du secteur lorsque l'application mettant en oeuvre la transaction a des droits supérieurs ou identiques aux attributs d'accès du secteur.

**[Table 1]**

| Attributs de la transaction demandant l'accès en écriture au registre de configuration des secteurs | Autorisation de l'accès au bit « i » du registre de configuration du secteur « i » |
|---|---|
| HDPL1 | Acceptée pour tous les bits et niveaux de protection |
| HDPL2 | Acceptée pour le bit « i » du registre de configuration seulement si le secteur « i » a pour attribut le cinquième ou sixième niveau d'interdiction d'accès de programme HDP-EXT, non-HDP |
| HDPL3 | Acceptée pour le bit « i » du registre de configuration seulement si le secteur « i » a pour attribut le sixième niveau d'interdiction d'accès de programme non-HDP |

**[Table 2]**

| Attributs de la transaction demandant l'accès en écriture au registre de configuration des secteurs | Autorisation de l'accès au bit « i » du registre de configuration du secteur « i » |
|---|---|
| Sec | Acceptée pour le bit « i » du registre de configuration si le secteur « i » a pour attribut le premier ou le |
| | deuxième niveau de restriction d'accès Sec, NS |
| NS | Acceptée pour le bit « i » du registre de configuration seulement si le secteur « i » a pour attribut le deuxième niveau de restriction d'accès NS |

**[Table 3]**

| Attributs de la transaction demandant l'accès en écriture au registre de configuration des secteurs | Autorisation de l'accès au bit « i » du registre de configuration du secteur « i » |
|---|---|
| Priv | Acceptée pour le bit « i » du registre de configuration si le secteur « i » a pour attribut le premier ou le deuxième niveau de privilèges Priv, unPriv |
| unPriv | Acceptée pour le bit « i » du registre de configuration seulement si le secteur « i » a pour attribut le deuxième niveau de privilèges unPriv |

Si l'autorisation de l'accès au bit « i » du registre de configuration du secteur « i » n'est pas acceptée dans un seul des trois tableaux alors la transaction est par exemple ignorée (commande write ignore) ou refusée.

Dans un exemple, par défaut, les secteurs mémoires sont définis lors de la réinitialisation par le premier niveau de restriction d'accès (Sec), le deuxième niveau de restriction de mode d'adressage (unPriv), et le quatrième niveau d'interdiction d'accès de programme (OB-HDP).

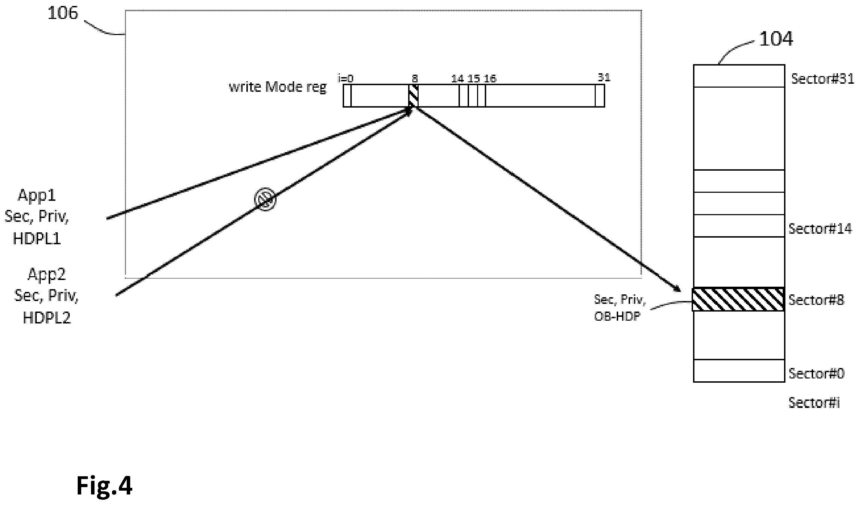

La figure 4 représente un procédé de fonctionnement du circuit de la figure 3 selon un mode de réalisation. Plus particulièrement, l'exemple de la figure 4 représente le cas où l'application App1 a comme attributs le premier niveau de restriction d'accès Sec, le premier niveau de privilèges Priv, et le premier niveau d'interdiction d'accès de programme HDPL1. Dans l'exemple représenté, l'application App2 a comme attributs le premier niveau de restriction d'accès Sec, le premier niveau de privilèges Priv, et le deuxième niveau d'interdiction d'accès de programme HDPL2. Dans cet exemple, l'application App1 a réservé le secteur d'indice i=8, en utilisant l'interface mémoire 106, et en le définissant comme ayant le premier niveau de restriction d'accès Sec, le premier niveau de privilèges Priv, et le quatrième niveau de niveau d'interdiction d'accès de programme OB-HDP. L'application 1 configure le secteur 8, par exemple par un changement du bit d'indice 8 dans le registre de configuration (write mode reg), avec l'un des modes parmi le mode de cyclage élevé HCD, le mode de protection en écriture (Write protection) ou un mode d'écriture (write mode). Ensuite, dans l'exemple représenté, l'application App2 tente de modifier la valeur du bit d'indice 8 dans le registre comprenant les valeurs de configuration write mode reg. En appliquant le procédé de la figure 3, l'application App2 ne peut pas modifier les valeurs du registre de configuration au niveau du bit d'indice 8 car le niveau de permission de la transaction, autrement dit de l'application App2, ne lui permet d'accéder au secteur d'indice 8. En effet, l'application App2 a pour attribut le deuxième niveau d'interdiction d'accès de programme HDPL2 ce qui ne donne pas accès aux secteurs protégés par le quatrième niveau d'interdiction d'accès de programme OB-HDP.

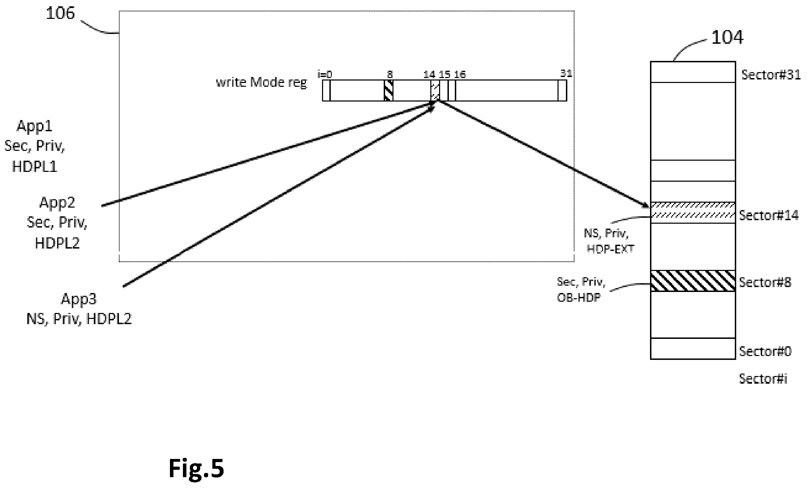

La figure 5 représente un procédé de fonctionnement du circuit de la figure 3 selon un mode de réalisation.

Plus particulièrement, l'exemple de la figure 5 représente le cas où l'application App1 et l'application App2 sont similaires à l'exemple de la figure 4. De plus, une troisième application App3 a comme attributs le deuxième niveau de restriction d'accès NS, le premier niveau de privilèges Priv, et le deuxième niveau d'interdiction d'accès de programme HDPL2. Dans cet exemple, l'application App3 a réservé le secteur d'indice i=14, en utilisant l'interface mémoire 106, et en le définissant comme ayant le deuxième niveau de restriction d'accès NS, le premier niveau de privilèges Priv, et le cinquième niveau d'interdiction d'accès de programme HDP-EXT. L'application 3 configure par exemple le secteur 14, par exemple par un changement du bit d'indice 14 dans le registre de configuration (write mode reg), avec l'un des modes parmi le mode de cyclage élevé HCD, le mode de protection en écriture (Write protection) ou un mode d'écriture (write mode). Ensuite, dans l'exemple représenté, l'application App2 tente de modifier la valeur du bit d'indice 14 dans le registre comprenant les valeurs de configuration write mode reg. En appliquant le procédé de la figure 3, l'application App2 est autorisée, par l'interface mémoire 106, à modifier les valeurs du registre de configuration au niveau du bit d'indice 14, autrement dit les valeurs de configuration du secteur d'indice 14, car le niveau de permission de la transaction, ici le premier mode de restriction d'accès Sec, lui permet d'accéder aux secteurs configurés avec le deuxième niveau de restriction d'accès NS.

Divers modes de réalisation ont été décrits. La personne du métier comprendra que certaines caractéristiques de ces divers modes de réalisation pourraient être combinées. En particulier, des valeurs de configuration des secteurs, autres que les valeurs de configuration correspondant au mode de cyclage élevé HCD, au mode de protection en écriture (Write protection) ou au mode d'écriture (write mode), peuvent être implémentées.

Enfin, la mise en oeuvre pratique des modes de réalisation décrits est à la portée de la personne du métier à partir des indications fonctionnelles données ci-dessus. En particulier, même si les exemples présentés font appel à un registre avec tableau d'association, il est possible de mettre en oeuvre le procédé de la figure 3 sans tableau d'association, au détriment toutefois d'une simplicité de mise en oeuvre.

## Revendications

1. Procédé de fonctionnement d'une mémoire non volatile, comprenant la validation d'une transaction, demandant une modification d'une valeur de configuration (HCD, Write protection, write mode) d'un secteur de la mémoire, après comparaison des attributs de la transaction avec des attributs d'accès dudit secteur de ladite mémoire ; le procédé étant **caractérisé en ce que**:
les attributs de la transaction comprenant un niveau de restriction d'accès (Sec, NS), un niveau de restriction de mode d'adressage (Priv, unPriv), et un niveau d'interdiction d'accès de programme pris parmi un premier,
un deuxième et un troisième niveaux d'interdiction d'accès de programme (HDPL1,HDPL2,HDPL3) ; et
les attributs du secteur comprenant le niveau de restriction d'accès (Sec, NS), le niveau de restriction de mode d'adressage (Priv, unPriv), et un niveau d'interdiction d'accès de programme pris parmi un quatrième,
un cinquième et un sixième niveaux d'interdiction d'accès de programme (OB-HDP, HDP-EXT, non-HDP).

2. Procédé selon la revendication 1, dans lequel la transaction est validée lorsque tous les attributs de la transaction ont un niveau de sécurité supérieur ou identique aux attributs d'accès dudit secteur de ladite mémoire correspondants.

3. Procédé selon la revendication 1 ou 2, dans lequel un registre avec tableau d'association est configuré pour stocker ladite valeur de configuration pour chaque secteur de la mémoire.

4. Procédé selon la revendication 3, dans lequel la valeur d'un bit d'indice donné dudit tableau correspond à la valeur de configuration d'un secteur ayant le même indice.

5. Procédé selon l'une quelconque des revendications 1 à 4, dans lequel une interface mémoire (106) est configurée pour autoriser ou refuser une transaction en fonction des attributs de la transaction et des attributs d'accès de secteurs de la mémoire.

6. Procédé selon la revendication 5 dans sa dépendance à la revendication 3, dans lequel l'interface mémoire (106) est configurée pour mettre en oeuvre ledit registre (write mode reg) avec tableau d'association.

7. Procédé selon la revendication 5 ou 6, dans lequel la validation de la transaction est réalisée par l'interface mémoire (106).

8. Procédé selon l'une quelconque des revendications 1 à 7, dans lequel les attributs de la transaction sont les attributs d'une application (App1, App2, App3) mettant en oeuvre ladite transaction.

9. Procédé selon l'une quelconque des revendications 1 à 8, dans lequel :
une transaction ayant un attribut correspondant à un premier niveau de restriction d'accès (Sec) peut accéder à un secteur ayant le premier ou un deuxième niveau de restriction d'accès (Sec, NS) ;
une transaction ayant un attribut correspondant à un premier niveau de restriction de mode d'adressage (Priv) peut accéder à un secteur ayant un deuxième niveau de restriction de mode d'adressage (unPriv) ;
une transaction ayant un attribut correspondant au deuxième niveau de restriction d'accès (NS) ne peut pas accéder à un secteur ayant le premier niveau de restriction d'accès (Sec) ; et
une transaction ayant un attribut correspondant à un deuxième niveau de restriction de mode d'adressage (unPriv) ne peut pas accéder à un secteur ayant le premier niveau de restriction de mode d'adressage (Priv).

10. Procédé selon l'une quelconque des revendications 1 à 9, dans lequel :
une transaction ayant un attribut correspondant à un premier niveau d'interdiction d'accès de programme (HDPL1) peut accéder à un secteur ayant comme attribut un quatrième, un cinquième ou un sixième niveaux d'interdiction d'accès de programme (OB-HDP, HDP-EXT, non-HDP) ;
une transaction ayant un attribut correspondant à un deuxième niveau d'interdiction d'accès de programme (HDPL2) peut accéder à un secteur ayant comme attribut le cinquième et le sixième niveaux de protection (HDP-EXT, non-HDP) mais ne peut pas accéder à un secteur ayant comme attribut le quatrième niveau d'interdiction d'accès de programme (OB-HDP) ; et
une transaction ayant un attribut correspondant à un troisième niveau d'interdiction d'accès de programme (HDPL3), peut accéder à un secteur ayant comme attribut le sixième niveau d'interdiction d'accès de programme (non-HDP) mais ne peut pas accéder à un secteur ayant comme attribut le quatrième ou le cinquième niveaux d'interdiction d'accès de programme (OB-HDP, HDP-EXT).

11. Procédé selon la revendication 10, dans lequel les attributs du secteur de la mémoire sont soit les attributs d'une transaction précédente soit des attributs par défaut définis par le premier niveau de restriction d'accès (Sec), le deuxième niveau de restriction de mode d'adressage (unPriv), et le quatrième niveau d'interdiction d'accès de programme (OB-HDP).

12. Procédé selon l'une quelconque des revendications 1 à 11, dans lequel la valeur de configuration correspond à un mode de cyclage (HCD, power mode, user mode), un mode de protection en écriture (Write protection) ou un mode d'écriture (write mode).

13. Circuit électronique (100), comprenant une interface de mémoire non volatile (106) et une mémoire non volatile (104), configuré pour mettre en oeuvre le procédé selon l'une quelconque des revendications précédentes.

## Patentansprüche

1. Ein Verfahren zum Betreiben eines nichtflüchtigen Speichers, aufweisend die Validierung einer Transaktion, die eine Änderung eines Wertes (HCD, Write protection, Write mode) der Konfiguration eines Sektors des Speichers anfordert, nach einem Vergleich der Attribute der Transaktion mit den Zugriffsattributen des Sektors des Speichers;
wobei das Verfahren **dadurch gekennzeichnet ist, dass**:
die Attribute der Transaktion eine Zugriffsbeschränkungsstufe (Sec, NS),
eine Adressierungsmodus-Beschränkungsstufe (Priv, unPriv) und eine Programmzugriffssperrstufe aufweist, die aus einer ersten, einer zweiten und einer dritten Programmzugriffssperrstufe (HDPL1, HDPL2, HDPL3) ausgewählt wird; und
die Attribute des Sektors, der die Zugriffsbeschränkungsstufe (Sec, NS), die Adressierungsmodus-Beschränkungsstufe (Priv, unPriv) und eine Programmzugriffssperrstufe aufweist, die aus einer vierten, einer fünften und einer sechsten Programmzugriffssperrstufe (OB-HDP, HDP-EXT, non-HDP) ausgewählt wird.

2. Das Verfahren nach Anspruch 1, wobei die Transaktion validiert wird, wenn alle Attribute der Transaktion eine Sicherheitsstufe aufweisen, die größer oder identisch mit den entsprechenden Zugriffsattributen des Sektors des Speichers ist.

3. Das Verfahren nach Anspruch 1 oder 2, wobei ein Register mit einer Zuordnungstabelle konfiguriert ist zum Speichern des Konfigurationswerts für jeden Sektor des Speichers.

4. Das Verfahren nach Anspruch 3, wobei der Wert eines Bits eines gegebenen Index der Tabelle dem Wert der Konfiguration eines Sektors mit dem gleichen Index entspricht.

5. Das Verfahren nach einem der Ansprüche 1 bis 4, wobei eine Speicherschnittstelle (106) konfiguriert ist zum Autorisieren oder Verweigern einer Transaktion entsprechend den Attributen der Transaktion und den Attributen des Zugriffs auf Sektoren des Speichers.

6. Das Verfahren nach Anspruch 5 in seiner Abhängigkeit von Anspruch 3, wobei die Speicherschnittstelle (106) konfiguriert ist zum Implementieren des Registers (write mode reg) mit einer Zuordnungstabelle.

7. Das Verfahren nach Anspruch 5 oder 6, wobei die Validierung der Transaktion durch die Speicherschnittstelle (106) durchgeführt wird.

8. Das Verfahren nach einem der Ansprüche 1 bis 7, wobei die Attribute der Transaktion die Attribute einer Anwendung (App1, App2, App3) sind, die die Transaktion implementieren.

9. Das Verfahren nach einem der Ansprüche 1 bis 8, wobei:
eine Transaktion mit einem Attribut, das einer ersten Zugriffsbeschränkungsstufe (Sec) entspricht, auf einen Sektor mit der ersten oder einer zweiten Zugriffsbeschränkungsstufe (Sec, NS) zugreifen kann;
eine Transaktion mit einem Attribut, das einer ersten Adressierungsmodus-Beschränkungsstufe (Priv) entspricht, auf einen Sektor mit einer zweiten Adressierungsmodus-Beschränkungsstufe (unPriv) zugreifen kann;
eine Transaktion mit einem Attribut, das der zweiten Zugriffsbeschränkungsstufe (NS) entspricht, nicht auf einen Sektor mit der ersten Zugriffsbeschränkungsstufe (Sec) zugreifen kann; und
eine Transaktion mit einem Attribut, das einer zweiten Adressierungsmodus-Beschränkungsstufe (unPriv) entspricht, nicht auf einen Sektor mit der ersten Adressierungsmodus-Beschränkungsstufe (Priv) zugreifen kann.

10. Das Verfahren gemäß einem der Ansprüche 1 bis 9, wobei:
eine Transaktion mit einem Attribut, das einer ersten Programmzugriffssperrstufe (HDPL1) entspricht, auf einen Sektor zugreifen kann, der als Attribut eine vierte, fünfte oder sechste Programmzugriffssperrstufe (OB-HDP, HDP-EXT, non-HDP) hat;
eine Transaktion mit einem Attribut, das einer zweiten Programmzugriffssperrstufe (HDPL2) entspricht, auf einen Sektor zugreifen kann, der als Attribut die fünfte und sechste Schutzstufe (HDP-EXT, non-HDP) aufweist, jedoch nicht auf einen Sektor zugreifen kann, der als Attribut die vierte Programmzugriffssperrstufe (OB-HDP) hat; und
eine Transaktion mit einem Attribut, das einer dritten Programmzugriffssperrstufe (HDPL3) entspricht, auf einen Sektor zugreifen kann, der als Attribut die sechste Programmzugriffssperrstufe (non-HDP) aufweist, jedoch nicht auf einen Sektor zugreifen kann, der als Attribut die vierte oder fünfte Programmzugriffssperrstufe (OB-HDP, HDP-EXT) hat.

11. Das Verfahren nach Anspruch 10, wobei die Attribute des Speichersektors entweder die Attribute einer vorherigen Transaktion oder Standardattribute sind, die durch die erste Zugriffsbeschränkungsstufe (Sec), die zweite Adressierungsmodus-Beschränkungsstufe (unPriv) und die vierte Programmzugriffssperrstufe (OB-HDP) definiert sind.

12. Das Verfahren nach einem der Ansprüche 1 bis 11, wobei der Konfigurationswert einem Zyklusmodus (HCD, Power Mode, User Mode), einem Schreibschutzmodus (Write Protection) oder einem Schreibmodus (Write Mode) entspricht.

13. Eine elektronische Schaltung (100), aufweisend eine nichtflüchtige Speicherschnittstelle (106) und einen nichtflüchtigen Speicher (104), konfiguriert zum Implementieren des Verfahrens nach einem der vorstehenden Ansprüche.

## Claims

1. Operating method of a non-volatile memory, comprising the validation of a transaction, requesting a modification of a value (HCD, Write protection, write mode) of configuration of a sector of the memory, after comparison of the attributes of the transaction with access attributes of said sector of said memory;
the method being **characterised in that**:
the attributes of the transaction comprising an access restriction level (Sec, NS), an addressing mode restriction level (Priv, unPriv), and a program access prohibition level taken from among a first, a second, and a third program access prohibition levels (HDPL1, HDPL2, HDPL3); and
the attributes of the sector comprising the access restriction level (Sec, NS), the addressing mode restriction level (Priv, unPriv), and a program access prohibition level taken from among a fourth, a fifth, and a sixth program access prohibition levels (OB-HDP, HDP-EXT, non-HDP).

2. The method according to claim 1, wherein the transaction is validated when all the attributes of the transaction have a security level greater than or identical to the corresponding access attributes of said sector of said memory.

3. The method according to claim 1 or 2, wherein a register with an association table is configured to store said configuration value for each sector of the memory.

4. The method according to claim 3, wherein the value of a bit of given index of said table corresponds to the value of configuration of a sector having the same index.

5. The method according to any one of claims 1 to 4, wherein a memory interface (106) is configured to authorize or to deny a transaction according to the attributes of the transaction and to the attributes of access to sectors of the memory.

6. The method according to claim 5 in its dependency on claim 3, wherein the memory interface (106) is configured to implement said register (write mode reg) with an association table.

7. The method according to claim 5 or 6, wherein the validation of the transaction is performed by the memory interface (106).

8. The method according to any one of claims 1 to 7, wherein the attributes of the transaction are the attributes of an application (App1, App2, App3) implementing said transaction.

9. The method according to any one of claims 1 to 8, wherein:
a transaction having an attribute corresponding to a first access restriction level (Sec) can access a sector having the first or a second access restriction level (Sec, NS);
a transaction having an attribute corresponding to a first addressing mode restriction level (Priv) can access a sector having a second addressing mode restriction level (unPriv);
a transaction having an attribute corresponding to the second access restriction level (NS) cannot access a sector having the first access restriction level (Sec); and
a transaction having an attribute corresponding to a second addressing mode restriction level (unPriv) cannot access a sector having the first addressing mode restriction level (Priv).

10. The method according to any one of claims 1 to 9, wherein:
a transaction having an attribute corresponding to a first program access prohibition level (HDPL1) can access a sector having as an attribute a fourth, a fifth, or a sixth program access prohibition level (OB-HDP, HDP-EXT, non-HDP);
a transaction having an attribute corresponding to a second program access prohibition level (HDPL2) can access a sector having as an attribute the fifth and the sixth protection levels (HDP-EXT, non-HDP), but cannot access a sector having as an attribute the fourth program access prohibition level (OB-HDP); and
a transaction having an attribute corresponding to a third program access prohibition level (HDPL3) can access a sector having as an attribute the sixth program access prohibition level (non-HDP), but cannot access a sector having as an attribute the fourth or the fifth program access prohibition levels (OB-HDP, HDP-EXT) .

11. The method according to claim 10, wherein the attributes of the memory sector are either the attributes of a previous transaction or default attributes defined by the first access restriction level (Sec), the second addressing mode restriction level (unPriv), and the fourth program access prohibition level (OB-HDP).

12. The method according to any one of claims 1 to 11, wherein the configuration value corresponds to a cycling mode (HCD, power mode, user mode), a write protection mode (Write protection), or a write mode (Write mode).

13. An electronic circuit (100), comprising a non-volatile memory interface (106) and a non-volatile memory (104), configured to implement the method according to any one of the preceding claims.
